# EUROPEAN PATENT APPLICATION

(11) **EP 3 640 512 A1**
(43) Date of publication of application: **22.04.2020**
(21) Application number: 19202635.9
(22) Date of filing: 11.10.2019
(51) Int. Cl.: F16L 11/12

(54) **MARKED MULTILAYER TUBE AND METHOD FOR THE PRODUCTION THEREOF**

(30) Priority: 16.10.2018 IT 201800009470
(71) Applicant: Tubigomma Deregibus S.r.l., 35030 Saccolongo (PD) (IT)
(72) Inventor: DEREGIBUS, Andrea, 35142 PADOVA (IT)
(74) Representative: Modiano, Micaela Nadia

(57) **Abstract**

A marked multilayer tube and a method for the production thereof. The multilayer tube (10) comprises at least one internal layer (11) and an external covering layer (12), and also, beneath the covering layer (12), means for transmitting messages by means of images (14).

## Description

The present invention relates to a marked multilayer tube and to a method for the production thereof.

The marked multilayer tube finds application in multiple sectors, including in particular the chemical, food, pharmaceutical and cosmetic sectors.

Currently it is known to use multilayer tubes constituted by a sheath, which is arranged in the innermost layer of the tubing, by one or more intermediate reinforcement layers, and by an external covering layer.

It is also known to show on the external surface of the tube, in sight, messages such as expiration dates, marks, possible uses of the tube, identification numbers, etcetera, on a transparent or colored background.

Typically, what must be marked on the surface of the tube is printed on a strip made of transparent or translucent plastic material. This strip is applied on the tube and, by heating it, transfers drawings, colors and signs onto the surface of the tube.

Although widespread, this method has a drawback due to the fact that if the tube is subjected to rubbing, for example by friction on a surface, the indications and colors are removed. The same occurs if it is subjected to an acid attack or to cleaning with detergents. Consequently, even indications that are essential for a correct use of the tube, such as its expiration date or its intended use, are removed.

As an alternative, in order to obviate this drawback, some manufacturers engrave the indications by heating and at the same time pressing against the surface a strip which bears a corresponding lettering in relief.

Even this technique is not free from drawbacks, because the messages cannot be reproduced in color and the maximum height of the strip is normally about 10 mm.

Furthermore, the surface of the tube is not smooth and bears hollows at the letters negatively stamped on the covering layer of the tube: deposits of dust or of contaminated materials that are difficult to clean and therefore potentially harmful may form in these hollows.

The aim of the present invention is to provide a marked multilayer tube and to provide a method for producing it which are capable of improving the background art in one or more of the aspects mentioned above.

Within this aim, an object of the invention is to provide a multilayer tube bearing a permanent message.

A further object of the present invention is to overcome the drawbacks of the background art in a manner that is alternative to any existing solutions.

Another object of the invention is to provide a marking of a multilayer tube that is highly reliable, relatively easy to provide and at competitive costs.

This aim and these and other objects that will become better apparent hereinafter are achieved by a marked multilayer tube comprising at least one internal layer and an external covering layer, and characterized in that it also comprises, beneath said covering layer, means for transmitting messages by means of images.

The aim and objects listed above are also achieved by a method for providing a marked multilayer tube which, starting from a tube blank comprising at least one internal layer, consists of:
- a first step of application, on the outermost layer of said blank, of means for transmitting messages by means of images,
- a second step of covering the outermost layer of said blank with a covering layer of said multilayer tube and with the interposition of said means for transmitting messages by means of images.

Further characteristics and advantages of the invention will become better apparent from the description of a preferred but not exclusive embodiment, of the multilayer tube according to the invention, illustrated by way of non-limiting example in the accompanying drawings, wherein:
- Figure 1 is a view of a multilayer tube according to the invention;
- Figure 2 is a view of a multilayer tube during the application of a strip bearing colors/indications related to said tube.

With reference to the figures, the multilayer tube according to the invention, generally designated by the reference numeral 10, comprises an internal layer 11, for example adapted to be arranged in direct contact with a fluid in transit, an external covering layer 12, and also, in the illustrated example, an intermediate reinforcement layer 13 (optionally more than one in other examples) which is coaxial to the other layers. If the tube is designed to transport chemical and food fluids, the internal layer 11 can be constituted by an extruded sheath made of fluorinated polymer, chosen from FEP, MFA, PFA, ECTFE and PTFE, or by a silicone rubber or by other synthetic rubbers such as butyl, nitrile and EPDM.

The covering layer 12 is made of elastomeric material, preferably UPE, or silicone or polyurethane.

Advantageously, the multilayer tube 10 also comprises, beneath the covering layer 12, means for transmitting messages by means of images 14 (colors and/or indications related to the tube itself or the installation environment).

These means 14 preferably comprise a strip bearing the images or, as an alternative, ink and/or plastic material transferred from a strip, bearing the messages, onto the layer below the covering layer 12. This lower layer is constituted by the last intermediate layer 13, the last layer outward, or by the internal layer 11, if there are no intermediate layers.

In the first case, in which the means 14 comprise the strip, such strip is substantially monolithic with the covering layer 12 and with the underlying layer, therefore with the internal layer 11 or with the last intermediate layer 13.

Conveniently, the covering layer 12 is transparent or translucent, so that the indications of the means for transmitting messages by means of images 14 are visible.

The strip, whether used as means 14 or used for transferring the indications, can have writing on a completely colored transparent base, for example with colors identifying the manufacturer.

The invention also relates to a method for producing a marked multilayer tube which, starting from a tube blank 15 comprising at least one internal layer 11, consists of:
- a first step of application, above the outermost layer of the blank 15, of means for transmitting messages by means of images 14,
- a second step of covering the outermost layer of the blank 15 with a covering layer 12 of the multilayer tube 10 and with the interposition of means for transmitting messages by means of images 14.

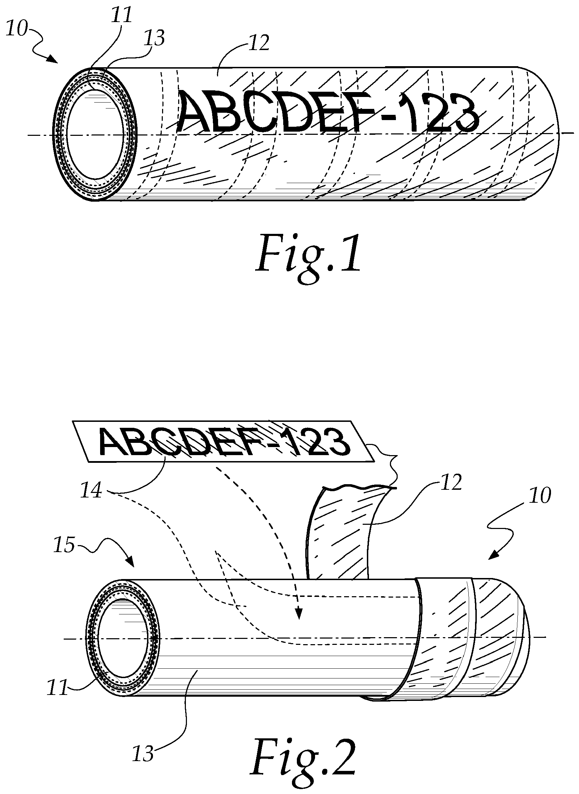

The covering layer 12 can be wound helically around the outermost layer of the blank, as shown in Figure 2 (in the example, it is the last outward intermediate layer), with the interposition of the means for transmitting messages by means of images 14. Subsequently, the multilayer tube 10 is vulcanized.

In the illustrated example, the first step of the method resides in applying, as means for transmitting messages 14, a strip bearing said messages. The latter is thus covered with the covering layer 12 and the multilayer tube is vulcanized with appropriate and per se known techniques (for example in a steam autoclave), with consequent adhesion of the layers to each other and to the strip, so as to create a single body. In this manner, even if the operator cuts the tube transversely during laying, the strip cannot be in any case removed nor can it accidentally escape.

The covering layer 12 can also be applied during the provision of the multilayer tube 10 also with production techniques that are different from helical winding, for example by extrusion above the last intermediate layer 13 after the means for transmitting messages by means of images 14 have been applied thereon.

In order to make the strip, as means for transmitting messages 14, create a single body with the covering layer 12 and with the underlying layer, therefore with the internal layer or with the last intermediate layer 13, all three must be made of mutually compatible materials, i.e., which mutually bond during vulcanization by chemical effect and not simply in a mechanical manner. Therefore, if for example the covering layer 12 is made of UPE, the strip must be made of a suitable material, capable of binding chemically to the underlying layer, in the example the intermediate layer 13, the latter being for example constituted by EPDM, butyl, or UPE. Likewise, if the covering layer 12 is made of silicone or polyurethane, the strip must be made of a suitable material, which chemically bonds with the intermediate layer 13.

In an alternative solution, the first step of the method consists in transferring the messages from a strip onto the outermost layer of the blank 15.

The transfer can occur for example by applying heat to the strip applied on the tube, a per se known method already used for transferring images onto the outermost layer.

After the transfer, the strip is removed, leaving on the surface only the images, i.e, in this case the means for transmitting messages 14 and, as in the previous case, they are covered by the covering layer 12.

The use of the multilayer tube, according to the invention, is evident from what described and illustrated and in particular it is evident that the covering layer 12 substantially constitutes a protection for the means for transmitting images 14, which thus cannot be subjected to direct abrasions and cannot be removed.

With respect to currently known solutions, the marked multilayer tube shows greater resistance of the messages to abrasion and to chemical substances and oils, with the consequent possibility to maintain over time information that is useful for identifying the tube, for its intended use, etcetera.

Moreover, the fact that the letterings and colors are protected by a transparent or translucent covering allows to view them as if they were applied over the covering.

Furthermore, the protection of the covering layer 12 minimizes the possibility that the strip might release the inks or contaminate the environments and the surfaces with which the tube comes into contact.

In practice it has been found that the invention achieves the intended aim and objects, providing a multilayer tube bearing visible and substantially permanent indications.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102018000009470 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A marked multilayer tube, comprising at least one internal layer (11) and an external covering layer (12), **characterized in that** it also comprises, beneath said covering layer (12), means for transmitting messages by means of images (14).

2. The multilayer tube according to claim 1, **characterized in that** said means for transmitting messages by means of images (14) comprise a strip that bears said messages.

3. The multilayer tube according to claim 2, **characterized in that** said strip is monolithic with said covering layer (12) and with said internal layer (11).

4. The multilayer tube according to claim 1, **characterized in that** said means for transmitting messages by means of images (14) comprise ink and/or plastic material transferred from a strip which bears said messages onto the layer that lies below said covering layer (12).

5. The multilayer tube according to one or more of the preceding claims, **characterized in that** said covering layer (12) is transparent or translucent.

6. The multilayer tube according to one or more of the preceding claims, **characterized in that** it comprises one or more intermediate reinforcement layers (13).

7. A method for providing a marked multilayer tube which, starting from a tube blank (15) comprising at least one internal layer (11), comprises the steps of:
- applying, above the outermost layer of said blank (15), means for transmitting messages by means of images (14),
- covering the outermost layer of said blank (15) with a covering layer (12) of said multilayer tube (10) and with the interposition of said means for transmitting messages by means of images (14).

8. The method according to claim 7, **characterized in that** it comprises a step of vulcanizing said multilayer tube (10).

9. The method according to one or more of the preceding claims, **characterized in that** said step of applying consists in applying a strip that bears the messages.

10. The method according to one or more of the preceding claims, **characterized in that** said step of applying consists in transferring the messages from a strip onto said outermost layer of said blank (15).
